# EUROPEAN PATENT SPECIFICATION

(11) **EP 2 373 881 B1**
(45) Date of publication and mention of the grant of the patent: **22.01.2014**
(21) Application number: 09764565.9
(22) Date of filing: 02.12.2009
(51) Int. Cl.: F03B 13/18, F03B 13/20, F03B 13/26

(54) **METHOD OF GENERATING AND STORING HEAT IN A FLOATING VESSEL AND USING THE HEAT ONSHORE**
VERFAHREN ZUR ERZEUGUNG UND SPEICHERUNG VON HITZE AUF EINEM SCHIFF UND VERWENDUNG DER HITZE AN LAND
MÉTHODE DE PRODUCTION ET STOCKAGE DE CHALEUR DANS UN NAVIRE FLOTTANT ET L'UTILISATION DE LA CHALEUR À TERRE

(30) Priority: 02.12.2008 GB 0821997
(43) Date of publication of application: 12.10.2011
(73) Proprietor: Greenheat Systems Limited, Ross-shire IV19 1NE (GB)
(72) Inventor: MACKAY, Andrew, Ross-shire IV19 1NE (GB)
(86) International application number: PCT/GB2009/051636
(87) International publication number: WO 2010/064041

(56) References cited:
- EP-A2- 1 890 032
- WO-A1-02/061273
- WO-A1-2008/019436
- CA-A1- 2 436 187
- US-A- 1 768 716
- US-A1- 2006 055 175
- US-A1- 2007 046 028

## Description

The present invention relates to a method and apparatus for **harnessing** renewable energy and in particular, though not exclusively, to a wave energy extraction method.

There is now great interest in systems to harness the energy from tidal and/or wave power. Such systems typically operate by mounting turbines/propellers or fins on a device fixed to the seabed or floating platform. The tidal/wave power is used to turn the fins and by rotation of the shaft the kinetic energy is converted to electricity by known methods. A major disadvantage of these systems is that an electrical cable must be run from the device to the shore, so that the electricity generated can be supplied **intermittently** to the National Grid. Laying cables is a **costly** and difficult process; cables must also be regularly inspected to ensure they remain free from damage. Yet further, the location of the fixed unit is limited by the length of the cable required to transport electricity to shore because of resistance losses.

Tidal and near shore fixed wave power are both also subject to variations in the energy available and have low **resource** energy densities. For example, the energy available from spring and neap tides vary **significantly** over a period of half a lunar month. Other natural renewable energy sources have similar variations e.g. solar, based on daylight hours and wind, based on speed and direction. Such fluctuations mean that electricity generated is random and uploaded to the National Grid in real time subject to the vagaries of the weather and tides. Accordingly, as consumer electricity demand on the National Grid fluctuates also at different times so that these renewable energy systems cannot match supply to demand.

It is therefore an object of the present invention to provide a method and apparatus for generating continuous 'firm' electrical power from intermittent renewable energy sources. It is a further object of the present invention to provide a method and apparatus for generating electrical power from renewable energy which does not require cables to be run from an offshore vessel to onshore. It is a yet further object of at least one embodiment of the present invention to provide a method and apparatus for generating power from renewable energy and to provide desalinated water as a by-product from a thermal generation process. According to a first aspect of the present invention there is provided a method of generating power from renewable energy, the method comprising the steps;
a) Locating a vessel offshore in waves or a tidal stream
b) using the energy in the waves or a tidal stream to generate heat
c) storing the heat in a heat store on the offshore vessel
d) transporting the heat store and transferring heat to an onshore facility
e) using the transferred heat to generate electrical power onshore

Step (b) preferably includes converting the energy in the waves or a tidal stream into heat.
Step (d) preferably includes transferring the heat to a larger thermal store located at an onshore generating facility.
Step (e) preferably includes converting the transferred heat to generate power onshore.

By storing the energy in a heat store on-board the **off-shore** vessel and transferring it onshore, as heat, there is no requirement to run cables over the seabed. The power can be generated thermally onshore at any time, as a heat store can also exist onshore. In this way the electrical power supply is non-intermittent and it is not dependent on the 'real time' availability of waves and tidal streams. The vessel will typically remain offshore until sufficient heat has been generated either directly or indirectly from the waves and stored. Supply of heat to the on-shore thermal store need not be constant because the onshore generating plant can typically operate at full rating for a period of time, for example, over 6 days, without thermal 'top ups' from the wave energy or tidal stream converter offshore vessel.

One apparatus for capturing wave power is described in WO02/25107 which is hereby incorporated by reference in its entirety. A ramp is preferably provided from an aperture in the vessel. Preferably it is extended to a depth below the waves having an average height h, to a depth at least h below the average troughs of the waves.

Preferably the kinetic energy in the wave/tidal stream is used to generate heat directly, that is there is preferably no intermediate stage where the energy is converted into electricity. The kinetic energy may be used to rotate a shaft, whereby rotation of the shaft within a heat transfer fluid increases the temperature of the fluid preferably when it is forced through a restriction. In this way, heat is transferred to the fluid; by retaining the heat transfer fluid in an insulated container we have a heat store. The heat transfer fluid may be any suitable fluid, water is preferred.

Typically the heat transfer fluid is maintained under pressure - for certain embodiments the temperature of the heat transfer fluid may be up to 400°C or more. Thus when water is used as the heat transfer fluid a pressurised heat store is preferred since it is preferred to largely maintain the heat transfer fluid as a liquid.

Alternatively the energy may be transferred to heat by directing pressurised hydraulic oil to a hydraulic motor that rotates a shaft that forces a continuous flow of the heat store's fluid through a restriction by means of suitable device such as an immersed Archimedes' screw connected directly or indirectly to the main power take-off shaft thus causing the temperature to rise in direct proportion to the dynamic shaft power.
Thus generating heat directly from the energy received is normally a more efficient process than converting it into electricity first and then into heat.

Nevertheless, in an alternative embodiment, a shaft receiving the energy may power a DC generator and preferably a so-called 'wild DC' generator which in turn heats the heat transfer fluid, optionally via one or more bank, preferably banks, of DC immersion heaters in direct proportion to the dynamic shaft power. Thus for such an embodiment, whilst the energy is first converted to 'wild DC' electricity it is thereafter converted to heat indirect proportion to the applied shaft power, and subsequently transferred to the shore, as heat. The inventor of the present invention has noted that the conversion to wild DC and then to heat is much more effective than the conversion of shaft power into truncated and regulated AC and then to heat.

For certain embodiments, the potential and kinetic energy may be stored as heat in a solid heat storage media, such as magnesium hydride as described in "High Temperature Metal Hydrides as Heat Storage Materials for Solar and Related Applications" (Int J Mol Sci. 2009 January; 10(1): 325-344) the disclosure of which is incorporated herein by reference in its entirety.

Thus storage of heat energy according to the present invention includes storage of energy in solid media or form. Preferably a portion of the heat generated and stored on the vessel is used to power the vessel by means of steam turbines.

Preferably the heat is transferred through a heat exchanger as is known in the art. More preferably, the transferred heat is used to drive a steam turbine. Advantageously electricity is generated from the shaft of the steam turbine as is known in the art. The electricity may be fed to the National Grid or may be used in a private supply. In this way the power generated can be continuous base load, peak shaving or load following.

Advantageously, the vessel may include further renewable energy gathering means to directly generate heat. These may include one or more solar panels and/or wind turbines. In the case of wind turbines, preferably a vertical axis turbine is used. They are particularly suitable for use in relatively hot climates where strong winds are present at the coast during daybreak and nightfall. Moreover in any situation the wind turbine may be used whilst the ship is in harbour and provide additional power to the vessel's thermal stores.

The heat store may comprise a plurality of separate containers. For example, in one embodiment four containers are provided and heat may be exchanged with suitable facilitates onshore.

In an embodiment of the present invention the transferred heat is used to desalinate sea water. Advantageously, the desalination treatment is conducted in the same process as operating the steam turbine. Advantageously, desalination is achieved by flashing seawater into steam to operate the steam turbine where the steam is subsequently condensed into water. In this way, desalination can be considered as a by-product of the method. Additionally, power generated onshore can be used to pump the desalinated water inland to provide irrigation for food production. Advantageously, excess heat in the pure water produced following desalination can be extracted to provide space heating for domestic, commercial, agricultural or horticultural use including hydroponics.

According to a second aspect of the present invention there is provided apparatus for generating power from renewable energy comprising a vessel containing a plurality of fins or Archimedes' screw upon a shaft; the shaft being located to rotate in a heat transfer fluid when tidal or wave power acts upon the fins or the screw; the heat transfer fluid being contained in a heat store on board the ship or offshore vessel.

Preferably, an aperture is provided in a hull of the vessel to receive waves therein, wherein the aperture is typically at least 1 m height, preferably at least 2m in height, optionally more than 3m in height. Normally the aperture is at least 2m width, preferably at least 5m width, and may be more than 15m width.

Preferably the aperture extends along at least 75% more preferably at least 95% of the length of the ship or offshore vessel.

Preferably a ramp is provided extending from the aperture. The ramp may be retractable. Typically waves travel into the aperture and contact the energy capture device.
Preferably the heat transfer fluid is forced through a restriction also contained in a heat store to release the dynamic shaft power as heat in direct proportion to the applied shaft power. By storing heat upon the vessel, the vessel does not require to have any physical connections onshore. In particular, an electrical cable is not required to transfer converted electricity to shore.

The vessel may include a heat exchanger. Alternatively and/or, additionally, a heat exchanger may be located at an onshore facility. Preferably the onshore facility includes a thermal store. Preferably the onshore facility includes a steam turbine rotating a drive shaft to generate electricity.

Preferably the vessel includes a steam turbine. The steam turbine may have a drive shaft rotatable to generate electricity such as a propeller drive shaft. In this way, the vessel can be self-propelled.
Thus, embodiments of the invention provide a non-intermittent supply of electricity from a renewable energy system which collects renewable energy offshore to generate heat, stores the heat in a thermal accumulator which is then transported ashore to a heat store. The heat can then be used to generate electricity. Ceramic plate power modules may also be used to convert heat into DC electricity. The DC electricity can be transmitted as HVDC or inverted locally to Grid Quality AC electricity.
Preferably the onshore facility includes a desalination plant. More preferably the plant includes a flash evaporator and a condenser as are known in the art.

An alternative aspect of the present invention is provided where it is impossible to use ships to bring off-shore renewable energy ashore as heat. For such embodiments, fixed location marine renewable energy systems could benefit from generating Varying High Voltage Direct Current (VHVDC). The electrical power so generated would be in direct proportion to the prime mover's dynamic shaft power and the varying voltage subject to the multiple pole Direct Current Generator's shaft velocity. The VHVDC electrical power is fed to arrays of immersion heaters fitted to a large thermal store ashore that will be charged up with heat. Electricity is generated from thermal storage in line with the utility grid's demands using known in the art thermodynamic processes. Advantageously, the electrical current, in amperes, flowing through the sub-sea cable can be reduced from shore by increasing the resistance of the immersion heating load allowing the voltage to rise in direct proportion to the increased resistance. This allows the off-shore renewable energy 'farm' to expand without having to lay a new cable with a larger cross sectional area of the subsea conductors.

The inventor of the present invention has also noted that the area of a sine wave above the x-axis is (2 x wavelength x height)/pi

An embodiment of the present invention will now be described, by way of example only, with reference to the following drawing of which;
Fig. 1 is a schematic illustration of apparatus for generating power from renewable energy according to an embodiment of the present invention;
Fig. 2 is a flow diagram showing the processing of heat recovered from a vessel in accordance with the present invention;
Fig. 3 is a side view of a second embodiment of a vessel in accordance with the present invention;
Fig. 4 is a side view of a third embodiment of a vessel in accordance with the present invention;
Fig. 5 is a perspective side view of the Fig. 4 vessel;
Fig. 6 is a sectional end view of the Fig. 4 vessel with the energy capture device removed for clarity; and,
Fig. 7A and 7B are one example of an energy capture device used in accordance with the method of the present invention.

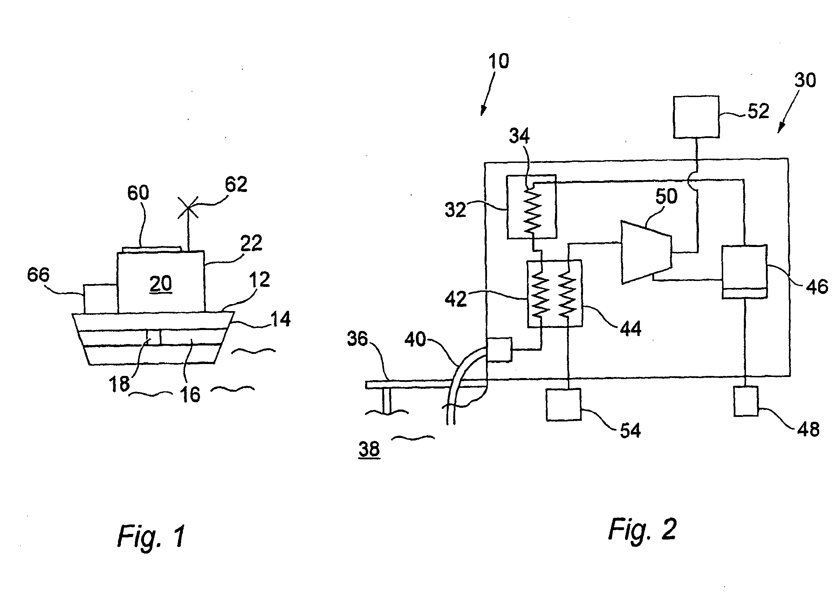

Reference is made to Figure 1 of the drawings which illustrates an apparatus, generally indicated by reference numeral 10, for generating power from renewable energy according to an embodiment of the present invention.

Apparatus 10 comprises a vessel 12 that is positioned in the most energetic of pelagic waves within the vessel's prospect area. In the hull 14 there are located two ducts or channels having one or more shafts 18 located perpendicularly thereto within the fluid pathway. Each shaft has a plurality of fins, typically 5 to 7, mounted thereon which can be turned on the kinetic energy of a wave or tidal stream. The shaft 18 is mounted to a gearbox which via the rotation causes the shaft to rotate with a heat transfer fluid 20. As by known physics' principles, the rotating shaft will heat up the fluid, raising its temperature. The more the shaft rotates in the waves or tidal stream, the increase in temperature which will be experienced by the fluid 20 will be in direct proportion to the shaft power derived from the extractable kinetic and potential energies of the wave. The fluid 20 is contained in a heat store 22 that can be considered as a thermal accumulator.
The apparatus also includes an onshore facility 30. The facility 30 has a thermal store 32 wherein the heat from the fluid 20 is transferred. The thermal store 32 will contain a further heat transfer fluid 34 so that the heat collected offshore can be stored at the facility 30. Heat is transferred between the fluids 20 and 34 via a heat exchanger. Thus the vessel 12 can dock at a harbour 36 and transfer heat from its store 20 to the thermal store 32. In the embodiment shown, sea water 38 is pumped through a line 40 to a heat exchanger 42. Here the sea water is heated by location against a condenser 44. The sea water 42 is further heated by passing through the thermal store 32 and then passes into a flash evaporator 46. The flash evaporator separates the salt from the sea water or brine. The waste liquid 48, being a saturated solution of salt, is drawn off and can be used for other purposes. Meanwhile, the heated water is used to run a steam turbine 50. The steam turbine 50 is used to generate electricity 52 by known methods, typically through a drive shaft of the turbine. The resultant water is then passed through the condenser 44 to provide pure water 54 which will have an elevated temperature. This heat in the water 54 may be extracted for use in domestic or horticultural applications, such as heating greenhouses. Further features which may be included are a solar panel 60 and/or a wind turbine 62 upon the vessel 12. Each of these will be used to further heat the fluid 20. Additionally, a steam turbine 66 can be located on the vessel12, such that the stored renewable heat on board can be used to power the vessel in order to move it freely to varying offshore locations and the harbour, 36.

It will be apparent that additional ships or offshore vessels can be used, each transferring their stored heat to the onshore facility 30. Likewise multiple facilities could be located around the coast to provide electricity or desalinated water where it is most needed. Each vessel can then be directed to unload renewable heat at the most appropriate facility.

In this way, shaft power is transferred to heat which in turn is transferred back to shaft power, according to an embodiment of the present invention. This is in contrast to the prior art systems which do not provide the heat conversion. It is through the heat conversion, that wave energy can be stored for transport to shore, stored, and converted to 'firm' electricity from storage, subject to demand.

By storing heat at the facility, electricity can be supplied to the National Grid on a continuous base load mode, a peak shaving mode or a load following mode. In this way the most effective transfer of electricity to the National Grid is achieved. Yet further, because electricity is generated from heat storage and can do so for over 6 days without any thermal input from the ships or offshore vessels it is not subject to the fluctuations and the availability of wave energy. The vessel is nomadic and seeks out and captures energy from the waves at any location in its prospect area regardless of availability and the time of day making the harvesting process effective also.

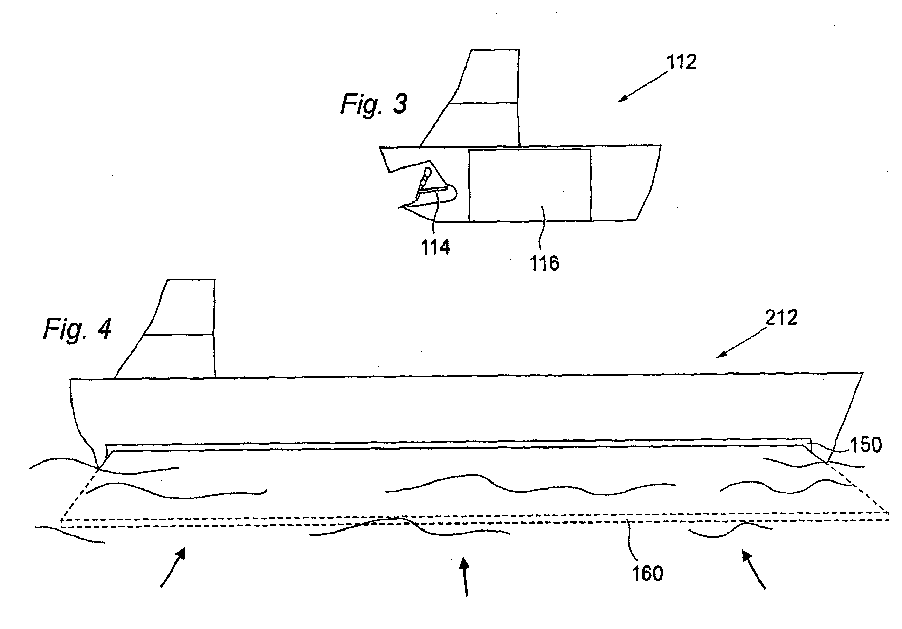

It is a principal advantage of the present invention to provide a method and apparatus for generating electrical power from renewable energy which is firm and secure. It is a further advantage of the present invention to provide a method and apparatus for generating power from renewable energy which does not require cables to be run from a vessel to onshore. It is a yet further advantage of at least one embodiment of the present invention to provide a method and apparatus for generating power from renewable energy and to provide desalinated water as a by-product. A further embodiment is shown in Fig. 3 comprising a vessel 112 with a wave energy extraction device 114 and a heat store 116.

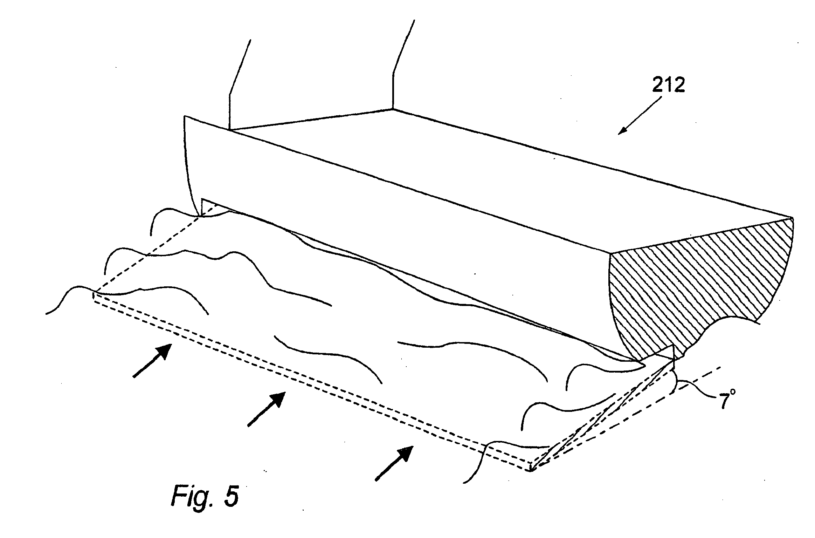

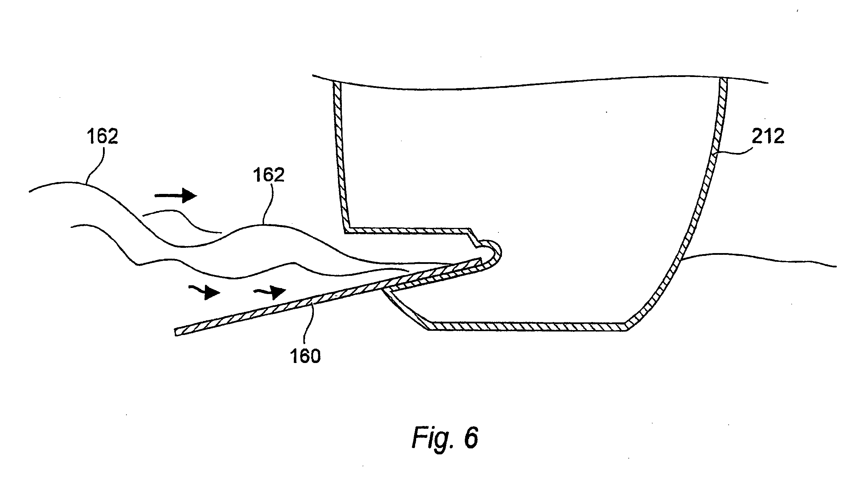

A larger vessel 212 is shown in Fig. 4 and Fig. 5 which has an aperture or 150 extending almost the full length of the vessel 212. From the aperture 150, a ramp 160 is extended into the water. The ramp is at a slight angle - preferably a maximum of 7 degrees to the horizontal to minimise reflective losses. The ramp 160 and aperture 150 thus provide an "artificial beach". Fig. 6 shows the artificial beach in the bow of the vessel. The beach is split into a plurality or seawater pathways each a single shaft and paddle mounted thereto within each seawater pathway. Each shaft has a single paddle with a rubberised skirt attached to its toe and is rotated through 75 degrees or thereby as the oncoming wave strikes the paddle which operates a crank on the paddle's shaft. The wave, having passed under the paddle at the end of the first stroke, returns by means of a parabolic reflector at the top of artificial beach to return the paddle to its start position. Kinetic and potential energies are extracted from the wave during both stroke and converted to heat by direct or indirect methods by known principles of physics.

In use, the vessel 112 is positioned to receive the most energetic waves in the artificial beach. Any suitable wave energy capture device, such as that described in WQ02/251 07 may be used in the vessel 112 to extract energy from the waves. In particular as shown in Fig. 6, the ramp 160 is extended to a position much deeper than the waves 162. The inventor of the present invention has recognised that the water below the trough of a wave 162 also has recoverable energy and rather than extracting energy merely from the visible surface sinusoid of the wave, having the ramp 160 extend lower than the straight line between troughs will recover energy in the 'wave stream' moving at the same velocity as the dispersant wave velocity immediately below the wave's surface profile.

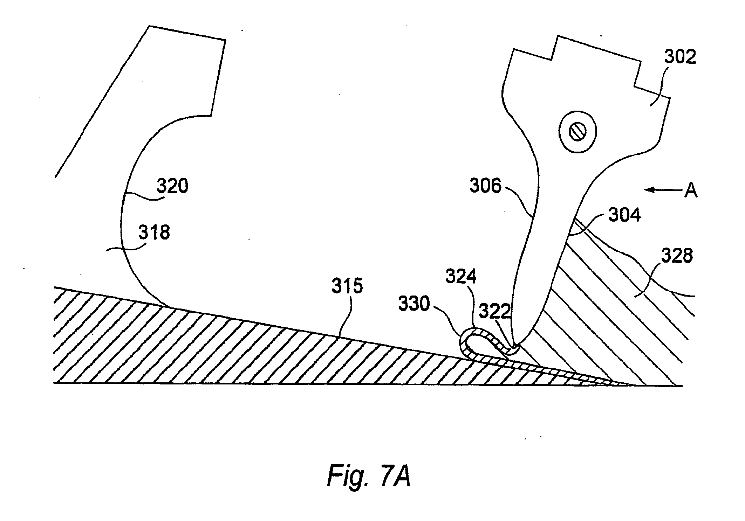

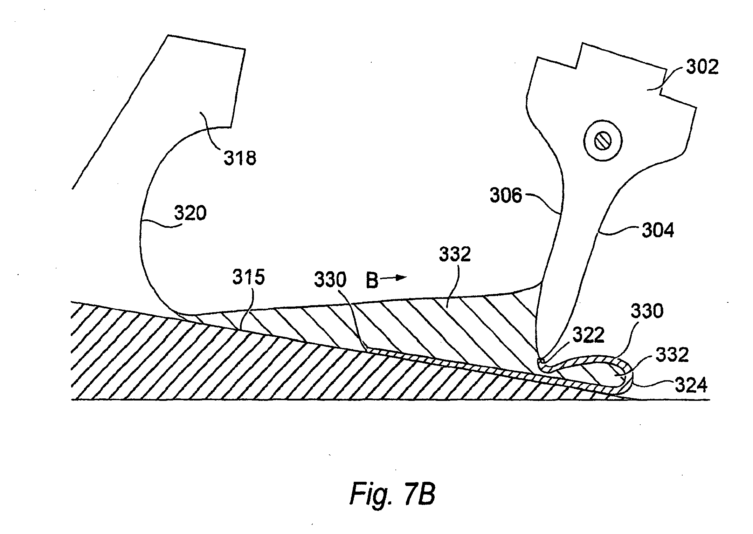

One suitable wave energy device 301 is shown in Figs. 7A and 7B and described in more detail in WO 0225107. A wave 328 travels over a flexible skirt 324 of a paddle 302 and impinges upon a lower portion of a forwardly directed wave engagement face 304, transferring at least some of the momentum of the wave 28 to the lower portion of the paddle 302 which subsequently rotates rearwardly through around 75 degrees of arc about a pivot 310. As shown in Fig. 7A, as the paddle 302 rotates from a more forwardly position, a flexible skirt 324 is also pushed rearwardly by the wave 328 so that a proximal portion 330 thereof, located adjacent the lowermost edge 322 of the paddle 302 passes thereunder thereby drawing a distal end 330 rearwardly thereafter. The wave 328 thereafter passes underneath the flexible skirt 324 and exits at the distal end 330 thereof and travels upwardly along the forwardly directed concave reflecting surface 320 of the reflector wall 318. As shown in Fig. 7B, the direction of travel of the wave is reversed as indicated by arrow B as a result of the wave being directed forwardly by the reflecting surface 320 so that the wave is now a reflected wave 332. The reflected wave 332 is directed forwardly by the reflecting surface 320 and the base 315 which is sloped forwardly at an angle of approximately 8 onto the rearwardly directed wave engagement face 306 of the paddle 302. The reflected wave 332 imparts at least portion of its momentum to the lowermost edge 322 of the paddle 302 and to the rearwardly directed wave engagement face 306 to rotate the paddle 302 back towards the original position. The reflected wave 332, acts to push the proximal end of the skirt 324 forwardly of the device 301 and under the lowermost edge 322 (see Fig. 7B), w herein when the paddle 302 passes through the neutral position. The lowermost edge 322 of the paddle 302 is raised as the paddle 302 moves to the first position, the reflected wave 332 continues to act upon and push the skirt 324 forwardly thereby drawing the distal end 320 of the skirt 324 forwardly thereafter whereupon when the skirt 324 again reverts leaving the device 301 in the (starting) position. In this way energy may be extracted from the waves.

The normal practice in the art of electricity generation is to avoid heat loss wherever possible. This is because the energy is normally derived from finite resources which must be mined such as coal. Thus there is presently a mindset in the industry against the use of thermal storage because of the inevitable heat loss.

The inventor of the present invention has gone against this mindset and recognised that whilst thermal loses should be minimised, the generation of the heat is received from the abundant and renewable wave, tidal or wind power and so such losses are not as critical as they would be for conventional electricity generation by more traditional combustion means. For example, predicted heat losses of 5% can be attenuated by storing 105% of the target heat store capacity from an infinite resource.

A further benefit of the present invention is the harvesting of wave power in the pelagic sea rather than closer to the shore. This results in a benefit because waves will lose much of their energy as the water shoals approaching the shore. Wave extraction devices close to shore can only recover energy from these energy depleted waves.
Moreover, many existing offshore wave energy devices extract energy from the surface of the waves. In contrast, preferred embodiments of the present invention also extract energy from the *wave* stream present below the wave surface. Indeed the inventor has recognised that the energy available is a function of the overall 'effective height' of the wave. The effective height is determined by adding the height of the *wave* and the depth of the toe of the artificial beach together. Further, conventional wave turbines are situated 3 - 4 miles offshore because the cable connecting them to the onshore facility cannot be longer due to resistance losses.

However, at this distance the sea is typically shallow so that energy is lost from the waves and the availability of waves in a fixed location is low. Thus, the present invention benefits by seeking out and harvesting wave energy in different locations, thereby increasing the availability of waves within areas of the sea which are much deeper and so have much larger waves.

Indeed comparing wind and fixed near shore wave power - near shore waves are 25-fold more energy dense than wind. Comparing fixed near shore wave power with nomadic pelagic wave power - the latter is 200- fold more energy dense than the former.

A fixed location conventional wave energy extraction device can receive around *5kW*/*m* of wave front averaged over a year. This figure is low because the waves, when available, have to come to the device. Flat calm periods in this one location may amount to over 60% of the year. However, the ship or offshore vessel is nomadic and can seek out the most energetic waves wherever they are in the prospect area on a day to day basis. The almost omnipresent waves which provide energy to the present invention raise the energy density to around 1 MW/m because almost all the 'no *wave*' or flat calm periods in hours are all but eliminated from the denominator of the fraction.

Another aspect of this invention is that existing fossil fuel thermal power stations can be converted by providing an alternative wave derived heat source (store). The existing grid connected steam turbine generators may then use 'green' steam instead.

It will be appreciated by those skilled in the art that various modifications may be made to the invention herein described without departing from the scope thereof. For example, any renewable energy power collection means may be used on the vessel to heat the fluid. The entire heat store may be transferred onshore and a replacement heat store may be located on the ship or offshore vessel.

## Claims

1. A method of generating power from renewable energy, the method comprising the steps:
(a) locating a vessel offshore in waves or a tidal stream;
(b) using the energy in the waves or a tidal stream to generate heat;
(c) storing the heat in a heat store on the offshore vessel;
(d) transporting the heat store to an onshore facility;
(e) using the heat to generate electrical power onshore.

2. A method as claimed in Claim 1 wherein the heat is stored in a heat transfer fluid such as water.

3. Method as claimed in claim 1 or claim 2, wherein a ramp is extended from an aperture in the offshore vessel into water having waves, said waves having an average height 'h' and wherein the ramp is extended to a depth of at least 'h' below the average troughs of the waves.

4. A method as claimed in claim 1 wherein step (b) includes using the energy in the waves to rotate a shaft in a heat transfer fluid to generate heat.

5. A method as claimed in claim 4, wherein step (b) includes the step of using the energy in the waves to direct pressurised hydraulic oil to a hydraulic motor that rotates a shaft that forces a continuous flow of the heat store's fluid through a restriction by means of a suitable device such as an Archimedes Screw.

6. A method as claimed in any one of claims 1 to 3, wherein step (b) includes the step of using the energy in the waves to rotate a shaft to power a DC generator, especially a wild DC generator, which in turn heats the heat transfer fluid via at least one immersion heater.

7. A method as claimed in any preceding claim, wherein a portion of the energy recovered from the waves, preferably a portion of the heat generated and stored on the offshore vessel, is used to power the vessel.

8. A method as claimed in any preceding claim, wherein in step (e) the transferred heat is used to drive a steam turbine and to desalinate sea water.

9. Apparatus for generating power from renewable energy comprising an offshore vessel containing a wave energy capture device comprising a shaft having a plurality of fins, or Archimedes' screw; the shaft being located to rotate in a heat transfer fluid when tidal or wave power acts upon the fins or screw; the heat transfer fluid being contained in a heat store.

10. Apparatus as claimed in claim 9 wherein an aperture is provided in a hull of the off-shore vessel to receive waves therein, wherein the aperture is at least 1m height x 2m width, preferably at least 1m height x 5m width, and may be more than 2m height x 15m width; such that in use, waves travel into the aperture and contact the energy capture device.

11. Apparatus as claimed in either one of claims 9 or 10, wherein the ramp is provided at an angle of less than 10 degrees to the horizontal, preferably at most 7 degrees.

12. Apparatus as claimed in any one of claims 9 t o claim 11 wherein the offshore vessel includes a steam turbine with a propeller drive shaft.

13. An onshore facility for receiving heat energy from an offshore vessel, the onshore facility comprising a thermal store and a steam turbine rotating a drive shaft to generate electricity.

14. An onshore facility as claimed in claim 13 wherein which includes a desalination plant.

## Patentansprüche

1. Verfahren zur Erzeugung von Strom aus erneuerbaren Energiequellen, wobei das Verfahren die folgenden Schritte beinhaltet:
(A) Auffinden eines Seefahrzeug Offshore in Wellen oder Gezeiten-Stroms;
(B) die Nutzung der Energie von Wellen oder Gezeiten-Stroms um Wärme zu erzeugen;
(C) Speichern der Wärme in einem Wärmespeicher auf dem Offshore- Seefahrzeug;
(D) Transportieren des Wärmespeichers zu einer Onshore-Anlage;
(E) die Verwendung der Wärme, um Onshore elektrische Energie zu erzeugen

2. Verfahren nach Anspruch 1, wobei die Wärme von einer Wärmeübertragungsflüssigkeit wie Wasser gespeichert wird.

3. Verfahren nach Anspruch 1 oder Anspruch 2, wobei eine Rampe von einer Öffnung im Offshore- Seefahrzeug bei Wellengang ins Wasser verlängert wird, wobei diese Wellen eine durchschnittlichen Höhe "h" und in eine Tiefe von mindestens 'h' unter dem Durchschnitt der Wellentäler erweitert werden.

4. Verfahren nach Anspruch 1, wobei Schritt (b) folgendes umfasst: die Energie der Wellen wird genutzt um eine Schaft in einer Wärmeübertragungsflüssigkeit zu drehen, um Wärme zu erzeugen.

5. Verfahren nach Anspruch 4, wobei der Schritt (b) folgendes umfasst: die Verwendung der Energie der Wellen um hydraulisches Öl zu einem hydraulischen Motor zu lenken, der eine Schaft dreht, um einen kontinuierlichen Strom der Wärmespeicherflüssigkeit, mit Hilfe einer geeigneten Vorrichtung wie einer archimedischen Schraube, durch eine Verengung zu lenken.

6. Verfahren nach einem der Ansprüche 1 bis 3, wobei Schritt (b) den Seefahrzeug der Verwendung der Energie in den Wellen zum Antrieb eines DC-Generator, insbesondere einen wilden DC-Generator, der wiederum die Wärmeübertragungsflüssigkeit erwärmt über mindestens einen Tauchsieder.

7. Verfahren nach einem der vorhergehenden Ansprüche, wobei ein Teil der Energie der aus den Wellen gewonnen wird, vorzugsweise ein Teil der Wärme, der auf dem Offshore- Seefahrzeug erzeugt und gelagert wurde, zur Stromversorgung des Schiffes verwendet wird.

8. Verfahren nach einem der vorhergehenden Ansprüche, wobei in Seefahrzeug (e) die übertragene Wärme zum Antrieb einer Dampfturbine und zur Entsalzung des Meerwassers verwendet wird.

9. Vorrichtung zur Erzeugung von Energie aus erneuerbaren Energiequellen mit Hilfe eines Offshore- Seefahrzeug, das eine Wellenenergie-Aufnahmegerät mit einer Welle, mit einer Mehrzahl von Rippen oder archimedische Schraube, wobei die Schaft sich so befindet, dass es sich in einer Wärmeübertragungsflüssigkeit dreht wenn Gezeiten oder Wellenenergie auf die Rippen oder die Schraube wirkt. Die Wärmeübertragungsflüssigkeit ist in einem Wärmespeicher enthalten.

10. Vorrichtung nach Anspruch 9, wobei eine Öffnung im Rampe des Seefahrzeugs vorgesehen ist, um Wellen aufzunehmen, wobei die Öffnung mindestens 1 m Höhe x 2m Breite, vorzugsweise mindestens 1 m Höhe x 5m Breite, und kann mehr als 2 Meter sein x 15m Breite, so dass bei Gebrauch, Wellen in die Öffnung gelenkt werden und in das Energie-Aufnahmegerät.

11. Vorrichtung nach einem der Ansprüche 9 oder 10, wobei die Rampe in einem Winkel von weniger als 10 Grad zur Horizontalen vorgesehen ist, vorzugsweise höchstens 7 Grad.

12. Vorrichtung nach einem der Ansprüche 9 bis 11, wobei das Offshore- Seefahrzeug eine Dampfturbine mit einer Propeller-Antriebswelle enthält.

13. Eine Onshore-Anlage zum Empfang von Wärmeenergie von einem Offshore- Seefahrzeug, die Onshore-Anlage mit einem thermischen Speicher und eine Dampfturbine dreht eine Antriebswelle zur Stromerzeugung.

14. Eine Onshore-Anlage nach Anspruch 13, wobei diese eine Entsalzungsanlage umfasst.

## Revendications

1. Procédé de production d'énergie à partir de sources d'énergie renouvelables, le procédé comprenant les étapes suivantes:
(A) Placer un navire au large des côtes, dans les vagues ou un courant de marée;
(B) Utiliser l'énergie des vagues ou du courant de marée pour produire de la chaleur;
(C) Stocker la chaleur dans un accumulateur de chaleur au sein du navire en mer;
(D) Transporter l'accumulateur de chaleur jusqu'à une structure terrestre;
(E) Utilisant la chaleur pour produire de l'énergie électrique sur terre.

2. Procédé similaire à la revendication, dans lequel la chaleur est stockée dans un fluide de transfert de chaleur tel que l'eau.

3. Procédé similaire à la revendication 1 ou 2, dans lequel une plage artificielle plonge est deployée au sein de vagues à partir du navire en mer, lesdites vagues ayant une hauteur moyenne "h", et dans lequel la plage artificielle plonge jusqu'à une profondeur d'au moins 'h' en-dessous du creux moyen des vagues.

4. Procédé similaire à la revendication 1, dans lequel l'étape (b) inclut l'utilisation de l'énergie des vagues pour faire tourner un bras dans un fluide de transfert de chaleur pour générer de la chaleur.

5. Procédé similaire à la revendication 4, dans lequel l'étape (b) inclut l'utilisation de l'énergie des vagues pour diriger de l'huile hydraulique pressurisée vers un moteur hydraulique qui fait tourner un bras qui entraine le flux continu du fluide de l'accumulateur de chaleur à travers une restriction au moyen d'un dispositif approprié tel qu'une vis d'Archimède.

6. Procédé similaire à l'une des revendications 1 à 3, dans lequel l'étape (b) inclut l'utilisation de l'énergie des vagues pour faire tourner un bras afin d'activer un générateur de courant continu, en particulier un générateur de courant continu non réglementée qui en retour chauffe le fluide de transfert de chaleur par l'intermédiaire d'au moins un thermoplongeur.

7. Procédé similaire à l'une des propositions précédentes, dans lequel une partie de l'énergie récupérée à partir des vagues, de préférence une partie de la chaleur générée et stockée à bord du navire en mer, est utilisée pour alimenter le navire.

8. Procédé similaire àl'une des propositions précédentes, dans lequel dans l'étape (e), la chaleur transférée est utilisée pour activer une turbine à vapeur et dessaler l'eau de mer.

9. Dispositif de production d'énergie à partir de sources d'énergie renouvelables, comprenant un navire en pleine mer contenant un appareil pour capturer l'énergie des vagues à l'aide d'un bras muni de plusieurs pales, ou vis d'Archimède; le bras étant placé de façon à tourner dans un fluide de transfert de chaleur sous l'effet de la pression du courant ou des vagues sur les pales ou vis; le fluide de transfert de chaleur étant contenu dans un accumulateur de chaleur.

10. Dispositif similaire à la revendication 9, dans lequel une ouverture est prévue dans la coque du navire afin d'y recevoir des vagues, dans lequel l'ouverture est d'au moins 1 m de haut sur 2m de large, de préférence d'au moins 1 m de haut sur 5m de large, et peut être supérieur à 2m de haut sur 15m de large, de sorte que lors de son utilisation, les vagues pénètrent dans l'ouverture et entrent en contact avec l'appareil de capture d'énergie.

11. Dispositif similaire à l'une des revendications 9 ou 10, dans lequel la plage artificielle plonge est placée avec un angle de moins de 10 degrés par rapport à l'horizontale, de préférence pas plus de 7 degrés.

12. Dispositif similaire à l'une des revendications 9 à 11, dans lequel le navire en mer comprend une turbine à vapeur avec un arbre de transmission.

13. Une structure à terre destinée à recevoir l'énergie thermique d'un navire en mer, la structure à terre comprenant un accumulateur de chaleur et une turbine à vapeur activant un arbre de transmission pour produire de l'électricité.

14. Une structure à terre similaire à la revendication 13 comprenant une usine de dessalement.
